# EUROPÄISCHE PATENTSCHRIFT

(11) **EP 1 468 870 B1**
(45) Veröffentlichungstag und Bekanntmachung des Hinweises auf die Patenterteilung: **07.06.2006**
(21) Anmeldenummer: 04007480.9
(22) Anmeldetag: 27.03.2004
(51) Int. Cl.: B60N 2/52

(54) **Vorrichtung und Verfahren zur Federung eines Fahrzeugsitzes**
Device and method for the suspension of a vehicle seat.
Dispositif et procédé de suspension d'un siège de véhicule.

(30) Priorität: 14.04.2003 DE 10317134; 14.04.2003 DE 10317122
(43) Veröffentlichungstag der Anmeldung: 20.10.2004
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A- 1 188 608
- DE-A- 10 007 661
- DE-B- 1 021 732
- DE-B- 1 129 845
- DE-C- 610 541
- US-B1- 6 199 820
- US-B1- 6 354 556

## Beschreibung

Die Erfindung betrifft eine Vorrichtung und ein Verfahren zur Federung eines Fahrzeugsitzes, insbesondere Nutzfahrzeugsitzes mit mindestens einer zwischen einem Sitzteil und einem Unterteil angeordneten Luftfeder zur Höhenverstellung eines Sitzteils und einer Steuereinrichtung zur Steuerung der Zu- und Abführung mindestens eines Zusatzluftvolumens zu oder von der Luftfeder gemäß den Oberbegriffen der Patentansprüche 1 und 11.

US 6199820 zeigt eine Federvorrichtung nach dem

Oberbegriff des Anspruchs 1. Federvorrichtungen für Fahrzeugsitze sind insbesondere für eine Dämpfung eine Höhenauslenkung des Fahrzeugsitzes bei Überfahren von unebenen Fahrbahnoberflächen, wie Schlaglöchern, bekannt. EP 1 188 608 A1 zeigt ein aktives Dämpfungssystem für gefederte Fahrzeugsitze, bei dem zwischen einem Sitzteil und einem mit dem Fahrzeug verbunden Unterteil neben einer mechanischen flexiblen Verbindungseinrichtung eine pneumatische Entlastungsvorrichtung und ein hydraulisches Stellglied angeordnet sind. Sowohl die pneumatische Entlastungsvorrichtung als auch das hydraulische Stellglied werden als Funktion eines Sitzfehlersignals, welches beispielsweise durch eine ruckartige Höhenverstellung des Sitzteils erzeugt wird, durch eine Steuereinrichtung gesteuert.

Derartige hydraulische Stellglieder erfordern eine Verbindung mit dem Bordnetz des Fahrzeuges, insbesondere eines Nutzfahrzeuges. Eine derartige Verbindung hat zur Folge, dass die Funktion der aktiven Dämpfung des Fahrzeugsitzes von der Funktion des Bordnetzes und insbesondere dessen Parameter abhängig ist, so dass eine Abstimmung der Parameter des Dämpfungssystems auf die Parameter des Bordnetzes und damit eine Anpassung des Systems an das jeweilige Nutzfahrzeug erforderlich ist.

Zudem sind Luftfedern bekannt, die eine linear verlaufende Kraft-Weg-Luftfederkennlinie aufweisen, deren Steigung in Abhängigkeit von der Ausgestaltung der Luftfeder und einem angewandten Zusatzluftvolumen verändert werden können, jedoch über die gesamte Kraft-Weg-Luftfederkennlinie hinweg dieselbe Steigung aufweisen. In der Regel werden bei derartigen Luftfedern konstant gehaltene Zusatzluftvolumina verwendet, die als eigentliches Luftvolumen der Luftfeder mit der ein- und ausfahrenden Luftfeder verbunden sind.

Derartige konstant gehaltene Zusatzvolumina haben zur Folge, dass, wenn die Luftfeder mit einer Kraft-Weg-Luftfederkennlinie mit geringer Steigung eingestellt ist, ein Zurückschwingen des Sitzteils in eine mittlere Position der Kraft-Weg-Luftfederkennlinie deshalb nicht möglich ist, da Reibungskräfte innerhalb der gesamten Federvorrichtung größer sind als eine Rückstellkraft innerhalb der Kraft-Weg-Luftfederkennlinie

Anderseits wird bei einer Ausbildung der Federvorrichtung derart, dass die Rückstellkraft größer ist - also eine größere Steigung der Luftfederkennlinie eingestellt wird - eine vergleichsweise harte Dämpfung sowohl im mittleren Hubbereich als auch in den Hubendbereichen der Luftfeder erreicht.

Zudem wird bei der Anwendung einer Luftfeder in einem Luftfederkennlinienbereich mit geringer Steigung - dem sogenannten Komfortbereich - , die die Zuschaltung eines großen Zusatzvolumens erfordert, ein Erreichen der Endanschläge in den Hubendbereichen der Luftfeder bei starken Ein- und Ausfahrbewegungen aufgrund einer starken Unebenheit wahrscheinlich, wodurch ein verminderter Sitzkomfort für den Benutzer des Fahrzeugsitzes entsteht. Die Einstellung eines Komfortbereichs wird bei Luftfedern für Fahrzeugssitze generell aufgrund besserer Übertragungswerte und daraus resultierenden höheren Komfort angestrebt.

Demzufolge liegt der vorliegenden Erfindung die Aufgabe zugrunde, eine Federvorrichtung für einen Fahrzeugsitz zur Verfügung zu stellen, die unabhängig von einem hydraulischen oder pneumatischen Bordnetz des Fahrzeuges funktionsfähig sowie ein- und ausbaubar ist und einen großen Fahrkomfort für einen Benutzer bei Benutzung des Fahrzeugsitzes in einem Komfortbereich, der durch eine Kraft-Weg-Luftfederkennlinie mit sehr geringer Steigung wiedergegeben wird, ermöglicht. Des Weiteren ist es Aufgabe der Erfindung, ein Verfahren zur Federung eines Fahrzeugsitzes mittels einer derartigen Federvorrichtung zur Verfügung zu stellen.

Diese Aufgabe wird vorrichtungsseitig durch die Merkmale des Patentanspruches 1 und verfahrensseitig durch die Merkmale des Patentanspruches 11 gelöst.

Ein wesentlicher Punkt der Erfindung liegt darin, dass bei einer Federvorrichtung für einen Fahrzeugsitz mit mindestens einer zwischen einem Sitzteil und einem Unterteil angeordneten Luftfeder zur Höhenverstellung des Sitzteils und einer Steuereinrichtung zur Steuerung der Zu- und Abführung mindestens eines Zusatzluftvolumens zu oder von der Luftfeder mittels der Steuereinrichtung bei einer wählbaren Ein- und/oder Ausfahrposition der Luftfeder das zu - oder abführbare Zusatzluftvolumen derart veränderbar oder abschaltbar ist, dass eine Steigung des Verlaufs einer Kraft-Weg-Luftfederkennlinie der Luftfeder in einem ersten und in mindestens einem weiteren Bereich unterschiedlich zueinander sind. Beispielsweise wird durch eine Erhöhung der Steigung der Kraft-Weg-Luftfederkennlinie für die weiteren Bereiche in Hubendbereichen der Luftfeder erreicht, dass bei Verwendung einer Luftfederkennlinie mit geringer Steigung im ersten Bereich zum einen eine ausreichende Rückstellkraft bei Erreichen der vorbestimmbaren Ein- oder Ausfahrposition der Luftfeder erhalten wird, um ein Rückstellen des Sitzteiles in die mittige Position der flachen Luftfederkennlinie innerhalb des ersten Bereichs zu erreichen. Zum anderen können die Endanschläge der Luftfeder nicht erreicht werden, da eine ausreichende Federkraft aufgrund der steileren Luftfederkennlinie in dem weiteren Bereich besteht.

Das zu- oder abführbare Zusatzluftvolumen in dem mindestens einen weiteren Bereich, der sich dem ersten Bereich anschließt, ist geringer als in dem ersten Bereich oder gänzlich Null und kann mehrstufig, vorzugsweise dreistufig zu- oder abgeführt werden. Auf diese Weise lassen sich unterschiedliche Dämpfungsgrade in Abhängigkeit von dem gewünschten Sitzkomfort einstellen.

Derartige Fahrzeugsitze werden vorzugsweise für Nutzfahrzeuge, wie Traktoren, Baumaschinenfahrzeuge und Stapler eingesetzt und weisen im ersten Bereich mit flacher Kennlinie ein Zusatzluftvolumen von größer als 0,1 l bei einer Sitzeigenfrequenz von beispielsweise ca. 1,0 Hz und einem Übertragungswert aus einem Bereich von 0,1 - 0,9 auf. Es ist das Zusatz volumen im ersten Bereich größer als 0,1l. Das Zusatzvolumen in dem weiteren Bereich ist entweder 0,0 l oder größer als 0,0 l. Vorzugsweise ist das Zusatzvolumen in mindestens einem weiteren Bereich geringer als im ersten Bereich. Hierdurch wird eine Federkrafterhöhung bei Überschreiten der Einfahrposition der Luftfeder erreicht, die die Luftfeder schnell ausfahren lässt und den Benutzer des Fahrzeugsitzes wieder in die mittige Position innerhalb des ersten Bereiches der Kennlinie zurückführt.

Ebenso wird bei Überschreiten einer bestimmten Ausfahrposition ein Federkraftverlust innerhalb der Luftfeder eingeleitet, der ein schnelles Wiedereinfahren der Luftfeder und demzufolge ein Zurückfallen des Benutzers in die vorgegebene mittige Position der Kennlinie innerhalb des ersten Bereiches bewirkt.

Gemäß einer bevorzugten Ausführungsform weist die Federvorrichtung eine Regeleinrichtung zur selbsttätigen Höheneinstellung des Sitzteils zu Anfang eines Benutzungsvorganges durch einen Benutzer mit einem vorbestimmten Gewicht auf, wobei Luft zu oder von der Luftfeder derart zu- oder abgeführt wird, dass sich die Luftfeder auf eine mittige Position im ersten Bereich der Kraft-Weg-Luftfederkennlinie einstellen kann. Die Regeleinrichtung umfasst im Bereich eine Armlehne des Fahrzeugsitzes einen Regelschalter zur Betätigung der Regeleinrichtung. Somit ist eine automatische Positionierung des Benutzers in dem Komfortbereich der Federvorrichtung, nämlich an der mittigen Position im ersten Bereich der Kennlinie, in Abhängigkeit von seinem Gewicht möglich, ohne dass hierdurch der weitere Bereich, in dem die Kennlinie eine größere oder kleinere Steigung aufweist, verringert wird.

Gemäß einer bevorzugten Ausführungsform weist die Federvorrichtung eine Wiedererkennungseinrichtung zum Wiedererkennen eines den Fahrersitz benutzenden Benutzers, insbesondere mittels seines Gewichts auf, um die automatische Aktivierung der Höheneinstellungregelung beim Niedersetzen des Benutzers in den Fahrzeugsitz zu ermöglichen.

Der erste Bereich der Kraft-Weg-Luftfederkennlinie entspricht vorzugsweise einer Hublänge der Luftfeder von bis zu 3000 mm, wohingegen der mindestens eine weitere Bereich einer Hublänge von vorzugsweise bis zu 2000 mm entspricht.

Der mindestens eine weitere Bereich schließt sich an den ersten Bereich ab den vorbestimmten Ein- und/oder Ausfahrpositionen der Luftfeder links- oder rechtsseitig an.

Mittels Erkennungs - und Schalteinrichtungen wird das Überschreiten der Ein- und Ausfahrpositionen erkannt und ein Umschalten der Federvorrichtung auf die Zu- und Abführung des veränderbaren Zusatzluftvolumens mittels der Steuereinrichtung bewirkt. Somit ist ein automatischer Übergang der Federkennlinie von einem Komfortbereich (erster Bereich) in einen Progressionsbereich (weiterer Bereich) und/oder einen Degressionsbereich (weiterer Bereich) sichergestellt.

Bei einem Verfahren zur Federung eines Fahrzeugsitzes wird erfindungsgemäß das zu- oder abführbare Zusatzluftvolumen mittels der Steuereinrichtung dann verändert oder abschaltet, wenn die Luftfeder die wählbaren Ein- und/oder Ausfahrpositionen überschreitet, um die Steigung des Verlaufs der Kraft-Weg-Luftfederkennlinie in dem ersten und in mindestens einem weiteren Bereich zu verändern. Das veränderbare Zusatzluftvolumen wird bei Überschreiten der Ein- und Ausfahrpositionen nur dann zu- beziehungsweise abgeführt, wenn Erkennungs- und Schalteinrichtungen in ersten und zweiten Hubendbereichen schwingungsbedingt und regelmäßig hochfrequenzartig durch die ein- und ausfahrende Luftfeder aktiviert werden. Dies hat zur Folge, dass bei einer unregelmäßigen Ein- und Ausfahrung der Luftfeder oder bei einem Ein- und Ausfahren mit großem Zeitabstand (kleiner gleich 1,0 Hz) eine Aktivierung der Erkennungs- und Schalteinrichtungen als unrentabel vermieden wird, wodurch eine Energieersparnis erreicht wird.

Weitere bevorzugte Ausführungsformen ergeben sich aus den Unteransprüchen.

Vorteile und Zweckmäßigkeiten der Erfindung sind der nachfolgenden Beschreibung in Verbindung mit der Zeichnung zu entnehmen. Hierbei zeigen:
- Fig.1: in einem Diagramm eine schematisch dargestellte Kraft-Weg-Luftfederkennlinie einer Federvorrichtung gemäß einer Ausführungsform der Erfindung;
- Fig.2: in einem Diagramm eine schematische Darstellung der in Fig. 1 gezeigten Luftfederkennlinie in verschobener Position, und
- Fig.3: in einem Diagramm eine schematische Darstellung der in Fig. 1 gezeigten Luftfederkennlinie in einer weiteren verschobenen Position.

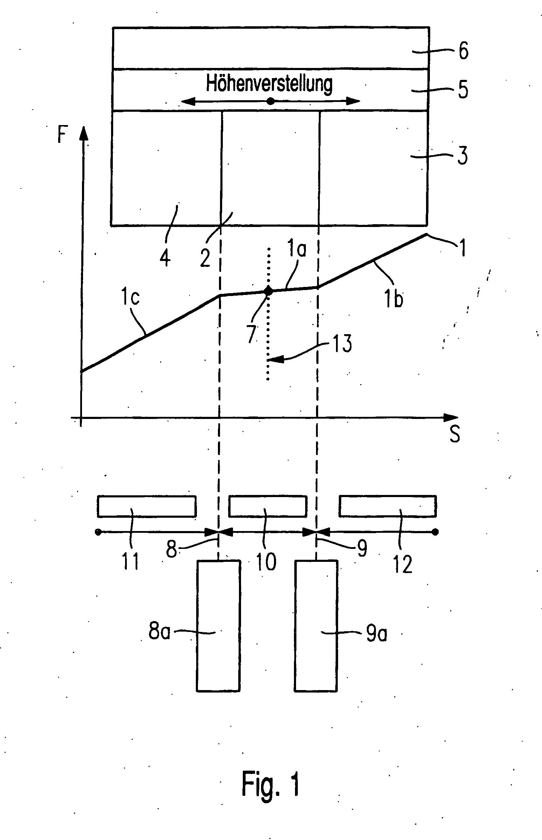

In Fig. 1 wird in einem Diagramm in einer schematischen Darstellung der Verlauf einer Kraft-Weg-Luftfederkennlinie 1 gemäß einer Ausführungsform der Erfindung dargestellt, wobei sich die Luftfederkennlinie 1 aus den Abschnitten 1a, 1b, 1c zusammensetzt. In dem Diagramm ist über die Ordinate die Kraft F und über die Abszisse der zurückgelegte Weg s der Luftfeder aufgetragen.

Idealerweise verlaufen die einzelnen Abschnitte 1a, 1b und 1c derart fließend ineineinander übergehend, dass die Übergänge bogenförmig ausgebildet sind, wobei die Bogen unterschiedlich große Bogenmaße aufweisen können.

In einem ersten Komfortbereich 2, in dem ein Zusatzluftvolumen von mehr als 0,1 Liter der Luftfeder zu- beziehungsweise abgeführt wird, weist die Luftfederkennlinie den Abschnitt 1a mit einer geringen Steigung auf. In einem zweiten Progressionsbereich 3, in dem ein Zusatzluftvolumen, welches kleiner als das in dem ersten Komfortbereich 2 abgeführte Zusatzvolumen ist, hinzugeführt wird, weist die Luftfederkennlinie 1 den Abschnitt 1b mit einer größeren Steigung als in dem Abschnitt 1a auf. Ebenso weist die Luftfederkennlinie in einem dritten Degressionsbereich 4, in dem ein Zusatzluftvolumen, welches ebenso kleiner als das in dem ersten Komfortbereich 2 abgeführte Zusatzvolumen ist, abgeführt wird, den Kennlinienabschnitt 1c mit einer größeren Steigung als in dem Abschnitt 1a auf.

Eine Höhenverstellung 5 bei schwingungsbedingtem Ein- und Ausfahren der Luftfeder, wie es beispielsweise bei Durchfahren von in der Fahrbahn angeordneten Schlaglöchern stattfindet, wird innerhalb des ersten, zweiten und dritten Bereiches 2, 3, 4 durchgeführt. Die Bereiche 2, 3 und 4 sind in einem Schaltfenster 6 zusammengefasst.

Innerhalb des ersten Komfortbereiches 2 ist ein Sitzteil des Fahrzeugsitzes idealerweise in einer mittigen Position 7 der Kennlinie angeordnet, wobei die mittige Position 7 auf einer HV-Linie 13 als Ideallinie vertikal verschoben werden kann.

Sobald der erste Komfortbereich 2 links- oder rechtsseitig durch Ein- oder Ausfahren des Federelements verlassen wird und eine vorbestimmte Ein- oder Ausfahrposition 8, 9 überschritten wird, erkennt dies eine Erkennungs- und Schalteinrichtung 8a, 9a und schaltet die gesamte Federvorrichtung auf die Zu- beziehungsweise Abführung des anderen Zusatzluftvolumens, nämlich mit einem kleineren Volumen um.

Der Komfortbereich 2 entspricht einer Hublänge 10, deren Obergrenze in einem Bereich von 0,1 - 3000 mm je nach technischen Anforderungen liegen kann, wohingegen der Degressionsbereich 4 und der Progressionsbereich 3 Hublängen 11, 12 mit Obergrenzen von 0,1 - 2000 mm aufweisen können.

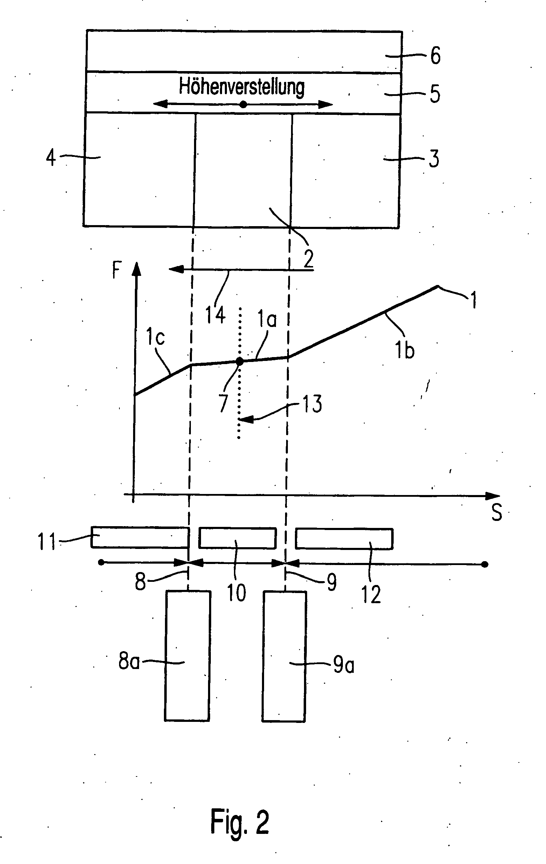

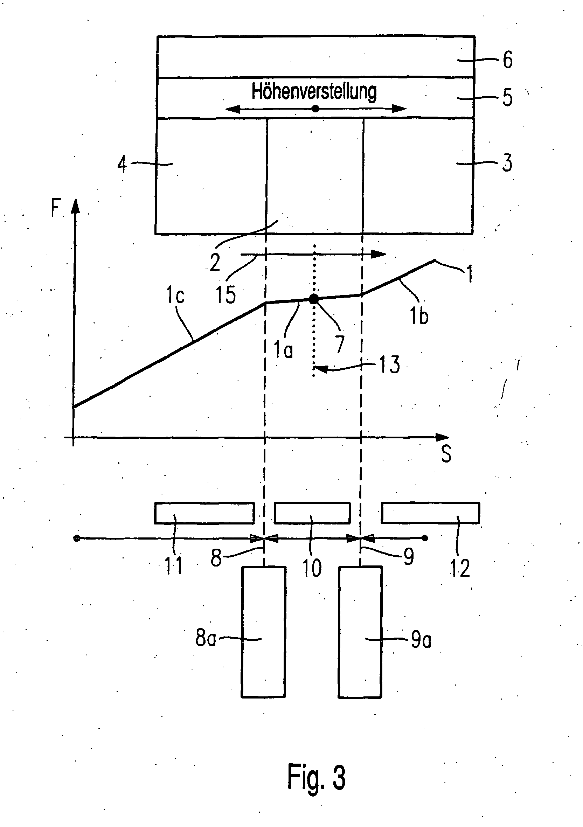

Der Funktionsablauf der erfindungsgemäßen Federvorrichtung ist wie folgt:
1. Ein Fahrer nimmt auf dem Fahrzeugsitz seine Position ein und es wird mittels einer Fahrer-Wiedererkennungseinrichtung eine Wiedererkennung aufgrund seines Gewichts durchgeführt. Die Gewichtsbelastung der Federvorrichtung führt zu einer Überschreitung der vorbestimmten Ausfahrposition 9.
   Mittels einer hier nicht gezeigten Luftversorgung wird selbsttätig Luft in die Federvorrichtung eingelassen, woraufhin der Fahrer mit dem Sitzteil in die mittige Position 7 innerhalb des Komfortsbereiches geführt wird.
   Die mittige Position 7 kann innerhalb des Kraft-Weg-Diagramms zur Einstellung einer gewünschten individuellen Höhe des Sitzteils verschoben werden, indem mittels einer Betätigungseinrichtung, die vorzugsweise im Armlehnenbereich des Fahrzeugsitzes angebracht ist, das Schaltfenster 6 innerhalb des Diagramms verschoben wird, wie es beispielsweise in den Figuren 2 und 3 wiedergegeben wird. Hierbei zeigen die Figuren 2 und 3 die Position des Schaltfensters mit den dazugehörigen ersten, zweiten und dritten Bereichen 2, 3, 4 bei einem nach oben beziehungsweise nach unten höhenverstellten Sitzteil.
2. Sobald eine regelmäßig hochfrequente Schwingung (≥ 1,0 Hz, Pulszahl von 10) auftritt und dies durch die Erkennungs- und Schalteinrichtung erkannt wird, wird bei Aktivierung der Erkennungs- und Schalteinrichtung 9a mittels einer hier nicht gezeigten Steuereinrichtung ein Signal an die Luftversorgung zum Anheben der HV-Position 7 abgegeben. Bei einer unregelmäßigen Schwingung mit großen Zeitabständen (≤ 1,0 Hz) findet keine Signalabgabe statt.
3. Bei wiederholtem, regelmäßig hochfrequenten Berühren der Erkennungs- und Schalteinrichtung 8a (≥ 1 Hz, Pulszahl von 10) wird mittels der Steuereinrichtung ein Signal an die Luftversorgung zum Absenken der HV-Position 7 durch Ablassen von Luft abgegeben. Bei einer unregelmäßigen Schwingung mit großen Zeitabständen (≤ 1,0 Hz) findet keine derartige Signalabgabe statt.
4. Die Steuereinrichtung errechnet in festgelegten Zeitabständen, wie beispielsweise in der Größenordnung von 1,0 s, den Mittelwert der Schwingungsamplituden und bringt dessen Verlauf in Deckungsgleichheit mit der angewählten HV-Linie 13 durch Zufuhr oder Ablassen von Druckluft.
5. Die HV-Linie 13 liegt mittig im Komfortfenster, dessen Breite gestuft oder stufenlos über Dreh- oder Stufenschalter regelbar ist. Die Breite des Komfortfensters entspricht einer Hublänge, deren Obergrenze in einem Bereich von 0,1 - 3000 mm liegt.
   Der Progressionsbereich 3 beginnt ab der Position 9 und geht in eine steile Kennlinie mit einem Zusatzluftvolumen von beispielsweise 0,0 l oder einem Wert größer als 0,0 l über. Hierdurch wird die Federvorrichtung im unteren Bereich - also auch außerhalb des Komfortbereichs - steif, wodurch ein Durchfedern, bzw. ein Endanschlag der Luftfeder vermindert wird. Hierfür erforderlich ist der Minimalwert der Hublänge. Anschließend findet eine Rückführung der Luftfeder in Richtung der HV-Position 7 statt.
6. Sofern bei permanent starker Schwingungsanregung eine Kennlinie im Progressionsbereich mit einer Steigung, die einem Zusatzluftvolumen von größer als 0,0 l entspricht, nicht ausreicht, wird eine noch steilere Kennlinie, die einem Zusatzluftvolumen von 0,0 l entspricht, verwendet. Sollte auch diese Kennlinie zur ausreichenden Dämpfung nicht ausreichen, wird das komplette Schaltfenster automatisch schrittweise nach oben verlagert, wie es durch den Pfeil 14 in Fig.2 wiedergegeben wird.
7. Ebenso wird im Degressionsbereich bei einer nicht ausreichend starken Steigung der Kennlinie, die einem Zusatzluftvolumen von größer als 0,0 l entspricht, ein Zusatzluftvolumen von 0,0 l angewendet. Sollte auch eine derartige Kennlinie nicht den notwendigen Kraftverlust im Degressionsbereich zum schnellen Absenken des Fahrers und des Sitzteiles ermöglichen, so wird das komplette Schaltfenster 6 automatisch in Schritten nach unten verlagert, wie es durch den Pfeil 15 in Fig.3 wiedergegeben wird.

Die Steuereinrichtung beinhaltet vorteilhaft eine Software, welche auf den jeweiligen Fahrzeugtyp und dessen Charakter abgestimmt ist, wobei die Software in einem stetig durchgeführten Verbesserungsprozess optimiert werden kann. Durch Einlesen über einen PC oder über einen Laptop erhält der Fahrzeuginhaber eine aktuelle Update-Version der Software.

Vorzugsweise kann durch Wechseln der Basis-Software der Verwendungszweck des Fahrzeugsitzes derart geändert werden, dass beispielsweise ein Einsatz des Fahrzeugsitzes sowohl in einem großen Schlepper mit gefederter Kabine als auch in einem kleinen Schlepper möglich ist.

### Bezugszeichenliste

- 1: Kraft-Weg-Luftfederkennlinie
- 1a, 1b, 1c: Abschnitte der Luftfederkennlinie
- 2: erster Bereich
- 3: zweiter Bereich
- 4: dritter Bereich
- 5: Höhenverstellung
- 6: Schaltfenster
- 7: mittlere Position
- 8, 9: Ein- und Ausfahrpositionen
- 8a, 9a: Erkennungs- und Schalteinrichtungen
- 10, 11, 12: Hublängen
- 13: HV-Positionslinie
- 14, 15: Verschiebung des Schaltfensters

## Patentansprüche

1. Federvorrichtung für einen Fahrzeugsitz, insbesondere Nutzfahrzeugsitz mit mindestens einer zwischen einem Sitzteil und einem Unterteil angeordneten Luftfeder zur Höhenverstellung (5) des Sitzteils und einer Steuereinrichtung zur Steuerung der Zu- und Abführung mindestens eines Zusatzluftvolumens zu oder von der Luftfeder,
**dadurch gekennzeichnet,dass**
bei einer wählbaren Ein- und/oder Ausfahrposition (8, 9) der Luftfeder mittels der Steuereinrichtung das zu- oder abführbare Zusatzluftvolumen derart veränderbar oder abschaltbar ist, dass Steigungen des Verlaufs einer Kraft-Weg-Luftfederkennlinie (1;1a,1b,1c) der Luftfeder in einem ersten und in mindestens einem weiteren Bereich (2; 3, 4) unterschiedlich zueinander sind.

2. Federvorrichtung nach Anspruch 1,
**dadurch gekennzeichnet, dass**
das zu- oder abführbare schwingungsdämpfende Zusatzluftvolumen in dem Bereich (3,4) der Kraft-Weg-Luftfederkennlinie (1;1a,1b,1c) höher oder geringer als im ersten Bereich (2) oder vollständig abgeschaltet ist.

3. Federvorrichtung nach Anspruch 1 oder 2,
**dadurch gekennzeichnet,dass**
das Zusatzluftvolumen in dem weiteren Bereich (3,4) jeweils mehrstufig, vorzugsweise dreistufig gegenüber der Luftfeder zu- oder abführbar ist.

4. Federvorrichtung nach einem der vorangegangen Ansprüche,
**gekennzeichnet durch**
mindestens ein pneumatisches Wegeventil zum Zu- oder Abführen des/der Zusatzluftvolumen.

5. Federvorrichtung nach einem der vorangegangenen Ansprüche,
**gekennzeichnet durch**
eine Regeleinrichtung zur selbsttätigen Höheneinstellung des Sitzteils zu Anfang eines Benutzungsvorganges **durch** einen Benutzer mit einem vorbestimmten Gewicht mittels einer Luftzu- oder abführung zu der Luftfeder derart, dass sich die Luftfeder auf eine mittige Position (7) im ersten Bereich (2) der Kraft-Weg-Luftfederkennlinie (1;1a, 1b, 1c) einstellt.

6. Federvorrichtung nach Anspruch 5,
**dadurch gekennzeichnet,dass**
die erste Regeleinrichtung einen im Bereich der Armlehne des Fahrzeugsitzes angeordneten Regelschalter umfasst.

7. Federvorrichtung nach einem der vorangegangenen Ansprüche,
**dadurch gekennzeichnet, dass**
der erste Bereich (2) innerhalb der Kraft-Weg-Luftfederkennlinie (1; 1a, 1b, 1c) mittels einer Betätigungseinrichtung durch den Benutzer und mittels der Steuereinrichtung derart verschoben werden kann, dass eine Einstellung des Sitzteils auf die gewünschte Höhe stattfindet.

8. Federvorrichtung nach einem der vorangegangenen Ansprüche,
**gekennzeichnet durch**
eine Wiedererkennungseinrichtung zum Wiedererkennen eines dem Fahrzeugsitz nutzenden Benutzers, insbesondere mittels seines Gewichts.

9. Federvorrichtung nach einem der vorangegangen Ansprüche,
**dadurch gekennzeichnet, dass**
das zu- und abführbare Zusatzluftvolumen in dem ersten Bereich (2) der Kraft-Weg-Luftfederkennlinie (1; 1a, 1b, 1c) größer als 0,1 l und in dem weiteren Bereich entweder 0,0 l oder größer als 0,0 l ist.

10. Federvorrichtung nach einem der vorangegangenen Ansprüche,
**gekennzeichnet durch**
Erkennungs- und Schalteinrichtungen (8a, 9a) zum Erkennen der wählbaren Ein- und Ausfahrpositionen (8, 9) der Luftfeder und zum Umschalten der Federvorrichtung auf die Zu- und Abführung des veränderbaren Zusatzluftvolumens mittels der Steuereinrichtung.

11. Verfahren zur Federung eines Fahrzeugsitzes, insbesondere Nutzfahrzeugsit bei dem mit mindestens einer zwischen einem Sitzteil und einem Unterteil angeordneten Luftfeder die Höhe (5) des Sitzteils verstellt wird und mit einer Steuereinnchtung die Zu- und Abführung mindestens eines Zusatzluftvolumens zu oder von der Luftfeder gesteuert wird
**dadurch gekennzeichnet,dass**
das zu- oder abführbare Zusatzluftvolumen mittels der Steuereinrichtung verändert oder abgeschaltet wird, wenn die Luftfeder eine vorbestimmbare Ein- und/oder Ausfahrposition (8, 9) überschreitet, um eine Steigung des Verlaufs einer Kraft-Weg-Federkennlinie (1, 1a,1b, 1c) gegenüber einem ersten Bereich (2) in einem weiteren Bereich (3, 4) zu verändern.

12. Verfahren nach Anspruch 11,
**dadurch gekennzeichnet,dass**
mittels Erkennungs- und Schalteinrichtungen (8a, 9a) das Überschreiten der vorbestimmten Ein- und Ausfahrposition (8, 9) der Luftfeder erkannt und die Federvorrichtung mittels der Steuereinrichtung auf das veränderbare Zusatzluftvolumen für den weiteren Bereich (3, 4) umgeschaltet wird.

13. Verfahren nach Anspruch 12,
**dadurch gekennzeichnet, dass**
das veränderbare Zusatzluftvolumen bei dem Umschalten der Federeinrichtung der Luftfeder nur dann zugeführt wird, wenn die Erkennungs- und Schalteinrichtungen (8a) in einem ersten Hubendbereich schwingungsbedingt regelmäßig und hochfrequenzartig durch die ein- und ausfahrende Luftfeder aktiviert werden.

14. Verfahren nach Anspruch 12,
**dadurch gekennzeichnet, dass**
das veränderbare Zusatzluftvolumen bei Umschalten der Federeinrichtung von der Luftfeder nur dann abgeführt wird, wenn die Erkennungs- und Schalteinrichtungen (9a) in einem zweiten Hubendbereich schwingungsbedingt regelmäßig und hochfrequenzartig durch die ein- und ausfahrende Luftfeder aktiviert werden.

15. Verfahren nach einem der Ansprüche 11 - 14,
**dadurch gekennzeichnet,dass**
das veränderbare Zusatzluftvolumen bei nicht ausreichender Schwingungsdämpfung in Hubendbereichen der Luftfeder bezüglich eines Resthubweges zu einem Hubende hin solange verringert wird, bis eine ausreichende Dämpfung der Luftfeder ohne eine Berührung des Hubendes durch einen Luftfederhubzylinder erreicht wird.

## Claims

1. Spring device for a vehicle seat, in particular a utility vehicle seat, comprising at least one air spring arranged between a seat part and a lower part for the height adjustment (5) of the seat part, and a control device for controlling the supply and discharge of at least one additional air volume to or from the air spring, **characterized in that**, at a selectable run-in and/or run-out position (8, 9) of the air spring, the additional air volume which can be supplied or discharged can be changed or switched off by means of the control device in such a way that inclines in the profile of a force/travel air spring characteristic (1; 1a, 1b, 1c) of the air spring in a first and in at least one further range (2; 3, 4) are different from one another.

2. Spring device according to Claim 1, **characterized in that** the vibration-damping additional air volume which can be supplied or discharged in the range (3, 4) of the force/travel air spring characteristic (1; 1a, 1b, 1c) is higher or lower than in the first range (2) or is completely switched off.

3. Spring device according to Claim 1 or 2, **characterized in that** the additional air volume in the further range (3, 4) can be supplied to or discharged from the air spring in each case in a number of stages, preferably in three stages.

4. Spring device according to any of the preceding claims, **characterized by** at least one pneumatic directional control valve for supplying or discharging the additional air volume(s).

5. Spring device according to any of the preceding claims, **characterized by** an adjustment device for the automatic height adjustment of the seat part at the start of a use operation by a user having a predefined weight by means of air being supplied to or discharged from the air spring in such a way that the air spring adjusts to a central position (7) in the first range (2) of the force/travel air spring characteristic (1; 1a, 1b, 1c).

6. Spring device according to Claim 5, **characterized in that** the first adjustment device comprises a regulator switch which is arranged in the region of the armrest of the vehicle seat.

7. Spring device according to any of the preceding claims, **characterized in that** the first range (2) within the force/travel air spring characteristic (1; 1a, 1b, 1c) can be displaced by means of an operating device by the user and by means of the control device in such a way that the seat part is adjusted to the desired height.

8. Spring device according to any of the preceding claims, **characterized by** a recognition device for recognizing a user using the vehicle seat, in particular by means of his weight.

9. Spring device according to any of the preceding claims, **characterized in that** the additional air volume which can be supplied and discharged in the first range (2) of the force/travel air spring characteristic (1; 1a, 1b, 1c) is greater than 0.1 1 and is either 0.0 1 or greater than 0.0 1 in the further range.

10. Spring device according to any of the preceding claims, **characterized by** recognition and switching devices (8a, 9a) for recognizing the selectable run-in and run-out positions (8, 9) of the air spring and for switching the spring device to supply and discharge the variable additional air volume by means of the control device.

11. Method of springing a vehicle seat, in particular a utility vehicle seat, in which the height of the seat part is adjusted by means of at least one air spring arranged between a seat part and a lower part and the supply and discharge of at least one additional air volume to or from the air spring is controlled by means of a control device, **characterized in that** the additional air volume which can be supplied or discharged is changed or switched off by means of the control device when the air spring exceeds a predefinable run-in and/or run-out position (8, 9), in order to change an incline in the profile of a force/travel spring characteristic (1; 1a, 1b, 1c) in a further range (3, 4) with respect to a first range (2).

12. Method according to Claim 11, **characterized in that** the exceeding of the predefined run-in and run-out position (8, 9) of the air spring is recognized by means of recognition and switching devices (8a, 9a) and the spring device is switched to the variable additional air volume for the further range (3, 4) by means of the control device.

13. Method according to Claim 12, **characterized in that**, when the spring device is switched, the variable additional air volume is supplied to the air spring only when the recognition and switching devices (8a) in a first end-of-travel region are activated on account of vibration, regularly and at a high frequency by the air spring moving in and out.

14. Method according to Claim 12, **characterized in that**, when the spring device is switched, the variable additional air volume is discharged from the air spring only when the recognition and switching devices (9a) in a second end-of-travel region are activated on account of vibration, regularly and at a high frequency by the air spring moving in and out.

15. Method according to any of Claims 11 to 14, **characterized in that**, in the event of insufficient vibration damping in end-of-travel regions of the air spring with respect to a residual travel distance, the variable additional air volume is reduced towards one end of travel until a sufficient damping of the air spring is achieved without the end of travel being touched by an air spring lifting cylinder.

## Revendications

1. Dispositif à ressort pour un siège de véhicule, notamment un siège de véhicule utilitaire, comportant au moins un ressort pneumatique disposé entre une assise et une partie inférieure, pour le réglage en hauteur (5) de l'assise, et un dispositif pour commander l'introduction et l'évacuation d'au moins un volume d'air supplémentaire en direction ou à partir du ressort pneumatique, **caractérisé en ce que**
dans une position pouvant être sélectionnée (8, 9) de contraction et/ou de déploiement du ressort pneumatique, le volume d'air supplémentaire pouvant être introduit ou évacué est modifiable ou peut être supprimé au moyen du dispositif de commande de telle sorte que des pentes de la variation d'une courbe caractéristique force - course de déplacement (1; 1a, 1b, 1c) du ressort pneumatique dans une première zone et dans au moins une autre zone (2; 3, 4) sont différentes l'une de l'autre.

2. Dispositif à ressort selon la revendication 1,
**caractérisé en ce que**
le volume d'air supplémentaire, qui peut être introduit ou évacué et amortit les vibrations, est plus élevé ou plus faible dans la zone (3, 4) de la courbe caractéristique force - course de déplacement (1; 1a, 1b, 1c) du ressort pneumatique que dans la première zone (2) ou est complètement supprimé.

3. Dispositif à ressort selon la revendication 1 ou 2, **caractérisé en ce que**
le volume d'air supplémentaire dans l'autre zone (3, 4) peut être introduit ou évacué respectivement selon plusieurs paliers, de préférence selon trois paliers par rapport au ressort pneumatique.

4. Dispositif à ressort selon l'une des revendications précédentes, **caractérisé par**
au moins une soupape de distribution pneumatique pour introduire ou évacuer le ou les volumes d'air supplémentaires.

5. Dispositif à ressort selon l'une des revendications précédentes, **caractérisé par**
un dispositif de régulation pour régler automatiquement l'assise en hauteur au début d'un processus d'utilisation par un utilisateur ayant un poids prédéterminé, à l'aide d'une introduction ou d'une évacuation d'air en direction du ressort pneumatique, de telle sorte que le ressort pneumatique se règle dans une position médiane (7) dans la première zone (2) de la courbe caractéristique force - course de déplacement (1; 1a, 1b, 1c) du ressort pneumatique.

6. Dispositif à ressort selon la revendication 5,
**caractérisé en ce que**
le premier dispositif de régulation comprend un interrupteur de réglage disposé dans la zone de l'accoudoir du siège du véhicule.

7. Dispositif à ressort selon l'une des revendications précédentes, **caractérisé en ce que**
la première zone (2) dans la courbe caractéristique force - course de déplacement (1; 1a, 1b, 1c) du ressort pneumatique peut être décalée au moyen d'un dispositif d'actionnement activé par l'utilisateur et au moyen du dispositif de commande de telle sorte qu'on obtient un réglage de l'assise à la hauteur désirée.

8. Dispositif à ressort selon l'une des revendications précédentes, **caractérisé par**
un dispositif d'identification pour identifier à nouveau un utilisateur utilisant le siège du véhicule, notamment au moyen de son poids.

9. Dispositif à ressort selon l'une des revendications précédentes, **caractérisé en ce que**
le volume d'air supplémentaire devant être introduit et évacué est supérieur à 0,1 l dans la première zone (2) de la courbe caractéristique force - course de déplacement (1; 1a, 1b, 1c) du ressort pneumatique et est soit égal à 0,0 l soit supérieur à 0,0 1 dans l'autre zone.

10. Dispositif à ressort selon l'une des revendications précédentes, **caractérisé par**
des dispositifs d'identification et de commutation (8a, 9a) pour identifier les positions pouvant être sélectionnées de contraction et de déploiement (8, 9) du ressort pneumatique et pour commuter le dispositif à ressort sur l'introduction et l'évacuation du volume d'air supplémentaire variable à l'aide du dispositif de commande.

11. Procédé pour réaliser la suspension d'un siège de véhicule, notamment d'un siège de véhicule utilitaire, dans lequel la hauteur (5) de l'assise est réglée à l'aide d'au moins un ressort pneumatique disposé entre une assise et une partie inférieure, et comportant un dispositif de commande, qui est commandé pour l'introduction et l'évacuation d'au moins un volume d'air supplémentaire en direction ou à partir du ressort pneumatique, **caractérisé en ce**
**qu'**à l'aide du dispositif de commande le volume d'air supplémentaire pouvant être introduit ou évacué est modifié ou supprimé lorsque le ressort pneumatique dépasse une position pouvant être prédéterminée de contraction et/ou de déploiement (8, 9), afin de modifier la pente de la courbe de variation d'une caractéristique force - course de déplacement (1, 1a, 1b, 1c) du ressort, par rapport à une première zone (2), dans une autre zone (3, 4).

12. Procédé selon la revendication 1, **caractérisé en ce que**
le dépassement de la position prédéterminée de contraction /de déploiement (8, 9) du ressort pneumatique est identifié à l'aide de dispositifs d'identification et de communication (8a, 9a) et le dispositif à ressort est commuté à l'aide du dispositif de commande sur le volume d'air supplémentaire modifiable, pour l'autre zone (3, 4).

13. Procédé selon la revendication 12, **caractérisé en ce que**
lors de la commutation du dispositif à ressort du ressort pneumatique, le volume d'air supplémentaire variable n'est introduit que lorsque les dispositifs d'identification et de commutation (8a) sont activés d'une manière régulière et selon un mode à haute fréquence, d'une manière conditionnée par les oscillations dans une première zone d'extrémité de course, par le ressort pneumatique qui se contracte et se déploie.

14. Procédé selon la revendication 12, **caractérisé en ce que**
le volume d'air supplémentaire variable est évacué lors de la commutation du dispositif à ressort par le ressort pneumatique uniquement lorsque les dispositifs d'identification et de commutation (9a) sont activés d'une manière régulière et selon un mode à haute fréquence, d'une manière conditionnée par les oscillations dans une première zone d'extrémité de course, par le ressort pneumatique qui se contracte et se déploie.

15. Procédé selon l'une des revendications 11 - 14, **caractérisé en ce que**
le volume d'air supplémentaire variable est réduit dans le cas d'un amortissement insuffisant des vibrations, dans des zones d'extrémité de course du ressort pneumatique, par rapport à un trajet de course restante jusqu'à une fin de course tant qu'un amortissement suffisant du ressort pneumatique est atteint sans qu'un vérin d'activation d'un ressort pneumatique n'atteigne l'extrémité de la course.
